## Europäisches Patentamt

## European Patent Office

## Office européen des brevets

(11) Veröffentlichungsnummer: **0 247 554**
**A2**

(12) **EUROPÄISCHE PATENTANMELDUNG**

(21) Anmeldenummer: **87107551.1**

(22) Anmeldetag: **23.05.87**

(51) Int. Cl.⁴: **H 05 K 9/00**

(30) Priorität: **27.05.86 DE 3617798**

(43) Veröffentlichungstag der Anmeldung: **02.12.87**
**Patentblatt 87/49**

(84) Benannte Vertragsstaaten: **AT BE CH DE FR GB IT LI LU NL SE**

(71) Anmelder: **Havenith, Hans, Schulze-Delitzsch-Strasse 35, D-5000 Köln 51 (DE)**

(72) Erfinder: **Havenith, Hans, Schulze-Delitzsch-Strasse 35, D-5000 Köln 51 (DE)**

(54) **Spezielle Ausgleichsleitung zur Ausschaltung von Potentialdifferenzen und zur Signallinearisierung.**

(57) Zur Ausschaltung von Potentialdifferenzen zwischen dem speisenden Netz-Primärstromkreis bzw. dem gekoppelten Sekundärstromkreis und den zu linearisierenden weiteren Stromkreisen, sowie innerhalb dieser Stromkreise von elektronischen Geräten, bei denen die Linearität von Signalen technisch von Bedeutung ist bzw. Potentialdifferenzen störend wirksam werden.

Hierzu werden die Massepunkte der zu linearisierenden Stromkreise mit der sogenannten Potentialausgleichsschiene oder dem Haupterder bzw. einem äquivalenten Erder des speisenden Netz-Primärstromkreises der elektrischen Netzstrom-Abnehmeranlage leitend verbunden.

Zu dieser Verbindung, die einen möglichst geringen elektrischen Widerstand aufweisen sollte und die insbesondere einen sehr viel geringeren Widerstand hat als der sogenannte Erdschutzleiter, der üblich installierten Licht-Steckdosenleitungen mit 1,5 mm² Querschnitt, können auch metallene Rohre von Wasser und Heizung, des Gebäudes innerhalb dessen die Erfindung angewandt wird, als leitende Verbindung mit eingeschlossen werden.

Die Erfindungsbeschreibung erläutert das Anwendungsbeispiel Verstärker und Lautsprecher.

Blatt B

Blatt A

Stromkreisverteiler

Zeichen:

1. Potentialausgleichsleitung
2. Potentialausgleichsschiene
3. Hausanschlußkasten bzw.
4. Gebäudeerder
5. Störspannungsmeßpunkte

Beschreibung:

Titel:

Spezielle Ausgleichsleitung zur Ausschaltung von
Potentialdifferenzen und zur Signallinearisierung.

Gattung des Anmeldungsgegenstands:

Die Erfindung betrifft eine Potentialausgleichsleitung
und Signallinearisierungsleitung nach dem Oberbegriff
Anspruch 1.

Angaben zur Gattung:

Die Ausgleichsleitung soll die Spannungsdifferenzen ausgleichen, die zwischen dem Netz-Primärstromkreis, dem induktivnetzgekoppelten Sekundärstromkreis und den nachgeordneten Sekundär-Signalstromkreisen, sowie innerhalb der
Signalstromkreise bestehen. Potentialdifferenzen treten
besonders durch Induktion auf und wirken in Signalstromkreisen, in denen die Linearität von Signalen von Bedeutung ist, störend.
Zwischen dem speisenden Netzstromkreis und den sekundär
gespeisten Signalstromkreisen besteht zumeist eine sogenannte induktive Kopplung. Hierdurch wird z.B. im Übertragungsglied Netztrafo - zur Erzeugung des Stroms in der
Sekundärspule - vom Primär- und Sekundärstromkreis eine
Spannung induziert. Beim Fließen des induzierten Wechselstroms innerhalb des Sekundärstromkreises werden wieder
Spannungen in den Primärkreis induziert usw. Gleichzeitig wirken innerhalb beider Spulen durch Induktanz die nach
der Lenzschen Regel erzeugten Induktionsströme den Strömen
in beiden Spulen entgegen und verursachen damit einen induktiven Stromabfall bzw. Spannungsdifferenzen, die auch
auf die Signalstromkreise Einfluß nehmen. Die Spannungen im
Sekundärspulenbereich wirken besonders störend, weil oft
alle Signalstromkreise über die Masse die sogenannte Erdschleife benutzen, wodurch es (aufgrund der gemeinsamen elektrischen Punkte) zu Potentialbeeinflussungen innerhalb der verschiedenen Signalstromkreise kommt.[1]

Bei der Kombination Verstärker-Lautsprecher bewirken zusätzlich Induktionsströme des Lautsprechers (Spuleninduktivität - Induktionen aufgrund der zeitlichen Änderungen des Magnetfeldes der Spule bzw. Induktionen, die der Lautsprecher aufgrund der relativen Bewegung zwischen Magnet und Schwingspule erzeugt), - die nach der Lenzschen Regel dem Signalstrom entgegenwirken - Potentialdifferenzen; denn auch diese Spannungsunterschiede wirken über die Erdschleife und die gemeinsamen elektrischen Punkte (Massepunkte), besonders auf schwächere Signale, signalverfälschend.

Durch gegenseitige Beeinflussung von Signalströmen und Induktionen kommt es hierbei auch zu Phasenschwankungen des Nutzsignals.

Für das Anwendungsbeispiel Verstärker-Lautsprecher sind zudem die verschiedenen Frequenzen des primär- und sekundärseitigen Netzstroms (Netzfrequenzabhängigkeit) und innerhalb der weiteren Signalstromkreise (signal-tonsignalabhängig) spannungsmäßig-differenzerzeugend, wie z.B. die vom Netzteil erzeugten Spannungsdifferenzen im Takt der Netzfrequenz auf die signalfrequenten Stromkreise Einfluß nehmen. Die potentiellen Differenzen dieser Art können jedoch allgemein auch bei anderen Betriebsmitteln innerhalb der linearzuhaltenden Stromkreise störend wirken.

---

1) Vgl. beiliegende Textauszüge Sansui, aber auch Zeitschrift HiFi-Vision 4, 1986, S. 23 Kasten.

**0 247 554**

Stand der Technik (mit Fundstellen):

Um die Beeinflussung der Signale durch Potentialdifferenzen auszuschalten oder zu reduzieren wird zur Zeit ein besonders großer Aufwand betrieben.

Im Bereich des HiFi-Niederfrequenz-Verstärkerbaus z.B. gehen die Hersteller von Spitzengeräten bei Vor- und Endverstärkern u.a. zum sogenannten symmetrischen Aufbau ihrer Geräte über, um so störende Spannungen auszuschalten.

Dabei legen sie z.B. den Eingang ihrer Geräte symmetrisch aus und erreichen so eine verbesserte Signalwiedergabe (vgl. Zeitschrift Stereoplay 3, 1986, S. 30, 36, 40; Zeitschrift HiFi-Vision 5, 1986, S. 18).

Die Firma Sansui baut - mit ihrer sogenannten X-Balanced-Typ I-Serie - Verstärker, die völlig symmetrisch aufgebaut sind, um Potentialdifferenzen innerhalb der Erdschleife zu verhindern (vgl. Blockdiagramm im HiFi-Prospekt Sansui; der Anmeldung ist eine Kopie der relevanten Aussagen beigefügt). Zudem wird z.B. als weitere Maßnahme, um den Einfluß von Störspannungen zu unterdrücken, die sogenannte Gegenkopplung nur noch begrenzt eingesetzt, da bei starker Gegenkopplung zwar der sogenannte Klirrfaktor herabgesetzt wird, aber - nach Untersuchungen von M. Otala - sogenannte dynamische Verzerrungen entstehen (vgl. hierzu "hk 600 Serie" Vollverstärker-Prospekt von harman/kardon, die relevanten Aussagen des Herstellers sind der Anmeldung als Kopie beigefügt; vgl. aber auch Zeitschrift HiFi-Vision 4, 1986, S. 17). Um Spannungsunterschiede innerhalb der Signalstromkreise auszuschalten, verwendet der Hersteller Onkyo eine zusätzliche Ausgleichsleitung zwischen Vor- und Endverstärker (vgl. Zeitschrift HiFi-Vision 4, 1986, S. 19 und S. 23 Kasten).

<u>Kritik am Stand der Technik:</u>

Die Beispiele aus den aktuellen Quellen zeigen, daß herstellerseits große und teilweise finanziell aufwendige Maßnahmen betrieben werden, um Potentialdifferenzen auszuschalten.

Mit dem völlig symmetrisch aufgebauten Verstärker bleibt eine Signalbeeinflussung verstärkerseits sogar quasi ausgeschlossen.

Alle genannten Maßnahmen gehen jedoch nicht darauf ein, daß zwischen dem speisenden Primärstromkreis bzw. dessen Potentialausgleichsschiene und den sekundären Signalstromkreisen Potentialdifferenzen bestehen, die auch innerhalb der Signalstromkreise und zwischen ihnen wirksam werden. Das heißt, die Potentialdifferenzen innerhalb der sogenannten Erdschleife werden als statische Komponente sowie als konstruktionsmäßig fest vorgegebener äußerer Einfluß in Kauf genommen.

Diese Potentialdifferenzen entstehen jedoch, weil die üblicherweise verwendeten Erdschutzleiter - die von den primärseitig speisenden Licht-Steckdosen bis zur Potentialausgleichsschiene der elektrischen Abnehmeranlage verlegt sind - zwar so bemessen sind, daß sie unterhalb des zulässigen Spannungsabfalls liegen; der zulässige Spannungsabfall darf nach DIN 18015 Teil 1 bis zu den Verbrauchsmitteln (Geräten) jedoch (je nach Größe der Anlage) maximal 1 oder 3% betragen (Zitat nach ABC der Elektroinstallation 7. Auflage, 1986, Heidelberg). Hier liegt die Ursache für die potentiellen Differenzen, die deshalb innerhalb der sogenannten Erdschleife zwangsläufig auftreten.

Bei "üblichen" Verbrauchern, die z.B. Elektrizität in Wärme, Licht oder Bewegung umsetzen, spielt der Spannungsabfall eine geringe Rolle.

Innerhalb einer Kombination aus speisendem Primärstromkreis und hiermit verbundenen sekundären linearzuhaltenden Signalstromkreisen werden die Potentialdifferenzen jedoch störend wirksam, besonders auch weil, - wie beim Beispiel HiFi-Verstärker-Lautsprecher - Ströme mit sehr großem Stromstärkeunterschied und ihren induktiv und kapazitiv hervorgerufenen Spannungsunterschieden aufeinander Einfluß nehmen. Übliche Erdschutzleiter - die zu den Licht-Steckdosen führen und die in Gebäuden Potentialausgleichsfunktionen übernehmen - sind streckenweise mit 1,5 mm$^2$ Querschnitt installiert. Aufgrund ihres für Signalstromkreise erheblichen elektrischen Widerstandes und dem hierdurch auftretenden Spannungsabfall, der ja innerhalb einer Abnehmeranlage nach DIN bis zu 1% oder 3% betragen darf, treten Potentialdifferenzen zwischen den Massepunkten der Signalstromkreise und der Potentialausgleichsschiene bzw. dem Haupterder der elektrischen Gebäudeinstallation auf. Neben dem großen Aufwand, der durch das aufwendigere Symmetrie-Konstruktionsprinzip als Mittel gegen Störspannungen zu betreiben ist, bleibt hier die Kritik, daß das Abschirmungs- oder Immunitätsprinzip - das z.B. mit dem symmetrischen Aufbau bei Verstärkern erreicht wird - den Störspannungseinfluß nicht völlig ausschaltet, weil die Spannungsunterschiede, die z.B. in der Lautsprecherschwingspule nach wie vor entstehen, nicht am Ort ihrer Entstehung - also am Lautsprecher bzw. an dessen Schwingspule selbst - eliminiert werden.

Aufgabe:

Die Erfindung hat die Aufgabe, die Potentialdifferenzen, die innerhalb der sogenannten Erdschleife bestehen, auszuschalten und die linearzuhaltenden Stromkreise der Betriebsmittel über ihre gemeinsamen elektrischen Punkte (Massepunkte) zu linearisieren.
Diese Aufgabe wird bei einer gattungsgemäßen Einrichtung durch die kennzeichnenden Merkmale des Anspruchs 1 gelöst.

Lösung:

Die Erfindung schaltet die störenden Wirkungen der Potentialdifferenzen weitgehend aus. Dadurch, daß sie als Potentialausgleichsleitung einen wesentlich geringeren Widerstand
aufweist als der üblich installierte Erdschutzleiter der
Licht-Steckdosen-Leitung, eliminiert sie störende Potentialdifferenzen innerhalb der sogenannten Erdschleife. Hierbei gleicht die Leitung zwischen den Massepunkten der gestörten Stromkreise und der Potentialausgleichsschiene bzw.
dem Gebäudeerder sowie innerhalb dieser Stromkreise Spannungsunterschiede aus. Als wichtiges Prinzip der Erfindung
ist dabei die Möglichkeit der Ausschaltung der Störspannungen
am Ort ihres Auftretens hervorzuheben; wie z.B. am Lautsprecher direkt ab den Schwingspulen der Lautsprecher oder
im Netzteil sofort an der Sekundärspule des speisenden
Netztransformators (siehe Ausführungsbeispiele) bzw. sofort
am Gleichrichter oder direkt an den Sieb- und Ladeelkos.


Vorteile der Erfindung:


Die Vorteile der Erfindung zeigen sich durch die Linearisierungseffekte, die aufgrund der Ausschaltung von Störspannungen mit Hilfe der Erfindung erreicht werden.
Das beschriebene Ausführungsbeispiel - die Gerätekombination
HiFi-Niederfrequenzverstärker-Lautsprecher - macht den
Linearisierungseffekt der Erfindung deutlich.
Für die Gerätekombination Verstärker-Lautsprecher z.B. lassen sich hierdurch gehörmäßig bedeutende Klangverbesserungen
feststellen:
Der z.T. rauhe und verzerrte Klang, der auch bei hochwertigen Lautsprechern hörbar ist, verschwindet. Einzelne Instrumente klingen sauberer, überlagern sich nicht mehr, sondern
bleiben unterscheidbar und ortbar.
Durch die Anwendung der Erfindung erübrigen sich aufwendigere und kostenungünstigere Maßnahmen, die darauf abzielen,
Signale gegen vorhandene Störspannungen abzuschirmen bzw.
Störspannungen vom Nutzsignal fernzuhalten, sowie die Signalstromkreise weitgehend oder ganz von der Masse (Erdschleife) zu trennen.

Die sogenannte Gegenkopplung kann als "eine der wichtigsten Schaltungsmaßnahmen der Verstärkertechnik" (Zit. nach Linder, Brauer, Lehmann; Taschenbuch der Elektrotechnik, 1985, Frankfurt a.M.) und als bewährtes System zur Stabilisierung, Bandbreitenvergrößerung und Verzerrungsreduzierung (vgl. Hübscher, Szepanski; Elektrotechnik Fachstufe 1, Braunschweig 1981, 2. Auflage), als das es in die Verstärkertechnik Eingang gefunden hat, weiter verwandt werden.

Die Gegenkopplung wird sogar für Verstärker höchster Qualitätsstufen wieder uneingeschränkt anwendbar, weil die signalverfälschenden Potentialdifferenzen bei Anwendung der Erfindung nicht mehr über die gemeinsamen elektrischen Massepunkte auf die Gegenkopplungsglieder der Schaltungen und deshalb nicht mehr auf die linearzuhaltenden Signale innerhalb der verschiedenen Signalstromkreise Einfluß nehmen.

Bei der Gerätekombination Verstärker-Lautsprecher ergaben sich nach Messungen z.B. am Lautsprecher je nach Frequenz Störspannungen von 0,2% bis über 4% der Lautsprecher-Signalspannungen. Die Erfindung reduzierte dabei alle Störspannungen auf zirka 20% (siehe Ausführungsbeispiele).

## Beschreibung, Ausführungsbeispiele:

Als Ausführungsbeispiel wird im folgenden die Gerätekombination Verstärker und Lautsprecher beschrieben.

Bei umfangreichen Versuchen an Verstärker und Lautsprecher wurde die Wirkung der Erfindung belegt.

Der Verstärker wurde nur insofern verändert, daß die wichtigen Massepunkte innerhalb seiner verschiedenen Elemente mit der Potentialausgleichsleitung - durch die Einrichtung eines gemeinsamen Massepunktes verstärkerseits - versehen wurden. Die Lautsprecher wurden ab den Massepunkten (sog. Minuspole) ihrer Chasis mit der Ausgleichsleitung an der Verstärkermasse separat verbunden.

Die Ausgleichsleitung wurde dann mit der Potentialausgleichsschiene der elektrischen Abnehmeranlage verbunden.

Hierbei zeigt sich, über die stufenweise Herabsetzung des Widerstandes der Ausgleichsleitung, parallel zur Verringerung ihres elektrischen Widerstandes, die linearisierende Wirkung der Erfindung.

Das beschriebene Anwendungsbeispiel ist der Anmeldung als Schalt-Blockdiagramm beigefügt.

Um die Verbindung mit der Potentialausgleichsschiene oder dem Gebäudeerder herzustellen, können z.B. auch die metallenen Rohre von Wasser und Heizung die Aufgabe als Potentialausgleichsverbindung übernehmen.

Läßt sich z.B. bei der nachträglichen Einrichtung der Erfindung in Gebäuden oder Wohnräumen ein ausreichend geringer Widerstand an einem Metallrohr für Wasser oder Heizung messen (zur Messung vgl. Ausbildungsmappe Elektroinstallation, Baade u.a., Heidelberg 1985) so kann die Potentialausgleichsleitung sofort an eines dieser Rohre elektrischleitend befestigt werden. Dies stellt den Potentialausgleich erfindungsgemäß her.

Zeigt sich hier ein zu hoher elektrischer Widerstand, so können die Rohre in der Regel doch benutzt werden, nur muß dann im Hausanschlußraum eine leitende Verbindung vom benutzten Rohrsystem zur Potentialausgleichsschiene oder zum Gebäudeerder verlegt werden.

Ausgezeichnete Linearisierungsergebnisse zeigten sich bei Widerstandswerten der Ausgleichsleitung die $\leq 0,005 \, \Omega$ sind; prinzipiell bedingen geringere Widerstandswerte auch einen verbesserten Potentialausgleich.

Für die Verwendung innerhalb von Wohnräumen ist ergänzend darauf hinzuweisen, daß zur Anwendung der Erfindung keine taudicken und teuren Kabel verlegt werden müssen. Es wird im Handel z.B. eine zweiadrige Litze ($4 \, mm^2$), die insgesamt $8 \, mm^2$ Querschnitt aufweist, angeboten. Eine 10 m-Rolle dieses flexiblen Kabels, das in verschiedenen Farben erhältlich ist und als Lautsprecherkabel angeboten wird, kostet(e) 1986 15 DM. Diese Litze hat die bescheidenen Abmessungen von ca. 3,5 mm mal 7 mm.

Anmerkung:

Bei der Anwendung der Erfindung innerhalb der Gerätekombination Verstärker-Lautsprecher muß sichergestellt sein, daß die elektrischen Verbindungskabel des Lautsprechers (Phase und Masse) beim Anschluß nicht vertauscht werden, weil es ansonsten zum elektrischen Kurzschluß innerhalb des Lautsprechersignalstromkreises kommen würde. D.h. anschlußmäßig darf es nicht zur Phasenvertauschung kommen.

A   Meßtechnischer Nachweis der Wirkung der Erfindung
    beim Lautsprecher

Bei dem meßtechnischen Nachweis - der Verringerung von Störspannungen im Lautsprecher-Signalstromkreis - wurden die
Störspannungen und die Signalspannung gleichzeitig gemessen
und auf dem Ozilloskop dargestellt.
Als Signalspannungsquelle diente die Test CD DHFI Schallplatte Nr. 9 (410741-2) sowie ein  mit der Erfindung nachgerüsteter Verstärker, dessen Schaltbild, ohne und mit Potentialausgleichsleitung, der Anmeldung beigefügt ist.
Die beigefügte Bilderserie zeigt die Oszillosgramme der Störspannungen (jeweils oben auf dem Bild) und der Sinuston-
Signalspannung (jeweils unten auf dem Bild).
Jeweils zwei Bilder der gleichen Signalfrequenz sind nebeneinandergestellt; links das Bild ohne und rechts das Bild
mit Potentialausgleich.
Da auch die Signalspannung bei den nebeneinandergestellten
Bildern jeweils gleich ist, stellt die linearer-verlaufende
Störspannungskurve der rechten Bilder die Linearisierungswirkung der Erfindung auch optisch dar; der Kurvendiagrammunterschied, links oben zu rechts oben, auf den Bildern entspricht der Verringerung der Störspannungen durch die Potentialausgleichsleitung.
Die beigefügte Tabelle verdeutlicht die Meßergebnisse und
den Linearisierungseffekt zahlenmäßig.
Aus den Bildern und den Daten der Tabelle ist die Zunahme
der induzierten Gegenströme der Lautsprecher bei steigender
Frequenz ablesbar.*  Gleichzeitig zeigen Bilder und Tabelle
die Abnahme der Störspannungen bei allen Frequenzen aufgrund
der linearisierenden Wirkung der Potentialausgleichsleitung.

---

*   Diese Störspannungen betrugen bei den Messungen - je nach
Frequenz - 0,2% bis über 4% der Signalspannung. Die Erfindung
reduzierte die Störspannungen insgesamt auf etwa ein Fünftel
oder 20% (siehe auch Teil B, Blatt 16ff.)

Nr. 1
ohne Potentialausgleichsleitung

Nr. 2 (unten Nr. 4)
mit Potentialausgleichsleitung

f: 60

Nr. 3

f: 400

- 12 -

**0 247 554**

Nr. 6 (unten Nr. 8)

mit P.

Nr. 5 ohne P.

f: 1.000

Nr. 7

f: 3.150

Nr. 10 (unten Nr. 12) mit P.

Nr. 9 ohne P.

f: ca. 10.000

Nr. 11

f: ca. 20.000

## Meßdaten zu Oszillogrammbildern

### Reduzierung der Störspannungen im Lautsprechersignalstromkreis

**Oszilloskop-Einstellung**

| Nr. | $f$ | P | $V_{sign.}$ | milli-$V_{Stör.}$ | % Stör. | $Y_B$ Tonspannung Volt/cm | $Y_A$ Störspannung milli-Volt/cm | Zeit/cm | Red. Stör. |
|---|---|---|---|---|---|---|---|---|---|
| 1 | 60 | — | 3,25 | 8 | 0,25 | 5 | 20 | 1 ms | — % |
| 2 | 60 | × | 3,25 | 2 | 0,06 | 5 | 20 | 1 ms | ca. 75 % |
| 3 | 400 | — | 2,55 | 12 | 0,47 | 5 | 20 | 0,5 ms | — % |
| 4 | 400 | × | 2,55 | 4 | 0,16 | 5 | 20 | 0,5 ms | ca. 66 % |
| 5 | 1.000 | — | 1 | 7 | 0,7 | 2 | 20 | 0,1 ms | — % |
| 6 | 1.000 | × | 1 | 2 | 0,2 | 2 | 20 | 0,1 ms | ca. 71 % |
| 7 | 3.150 | — | 0,85 | 4 | 0,47 | 1 | 20 | 0,1 ms | — % |
| 8 | 3.150 | × | 1,6 | 3 | 0,19 | 1 | 20 | 0,1 ms | ca. 60 % |
| 9 | 10.000 ca. | — | 0,55 | 13 | 2,36 | 1 | 20 | 20 µs | — % |
| 10 | 10.000 | × | 0,55 | 5 | 0,91 | 1 | 20 | 20 µs | ca. 62 % |
| 11 | 20.000 ca. | — | 0,55 | 24 | 4,3 | 1 | 20 | 10 µs | — % |
| 12 | 20.000 | × | 0,55 | 7 | 1,27 | 1 | 20 | 10 µs | ca. 70,5 % |

0 247 554

- 15 -

Erläuterungen zu Meßdaten-Tabelle:

Nr.:             Bildnummer

f:               Frequenz des Sinustonsignals

$P:-,X$,       - ohne Potentialausgleich,
                X mit Potentialausgleich

V sign:       Signalspannung des Sinusstroms am sogenannten
Pluspol des Lautsprechers, als Oszillogramm
unten auf den Bildern dargestellt.

milli- V stör: signalfrequente vom Lautsprecher erzeugte
Störspannung, am sog. Minuspol des Lautsprechers; als Oszillogramm oben auf den
Bildern dargestellt.

% Stör.:      Prozentanteil dieser Störspannungen im
Verhältnis zur Sinussignalspannung.

Red. Stör.:   Reduzierung der durch den Lautsprecher
produzierten Störspannung aufgrund der
Potentialausgleichsleitung in %.

Bei den Messungen hatte die verwendete Potentialausgleichsleitung einen 5fachen größeren Querschnitt als die Lautsprecherzuleitung pro Phase aufweist und entsprechend einen
fünffachen geringeren elektrischen Widerstand, als eine der
beiden Teiladern der Lautsprecherzuleitung aufweist.
Der elektrische Widerstand des Netzschutzleiters betrug
0,6 Ohm. Der elektrische Widerstand der Potentialausgleichsleitung betrug ca. 0,002 Ohm.

B  Meßtechnischer Nachweis des allgemeinen-gesamten Linearisierungseffektes der Erfindung

(für das Anwendungsbeispiel HiFi-Niederfrequenzverstärker-Lautsprecher)

Erläuterungen zur Messung:

Für diese Messungen wurde das verwendete Oszilloskop nicht mehr über dessen speisende Licht-Steckdose geerdet, da deren Netzerde ja selbst Potentialdifferenzen aufweist. Das Gerät wurde deshalb über die Potentialausgleichsleitung quasi ideal geerdet.

(Die Messungen und Oszillogramme Nr. 1 bis Nr. 12 zeigen deshalb nicht die gesamte Linearisierungswirkung der Erfindung innerhalb des Lautsprechersignalstromkreises, weil bei diesen Messungen das Oszilloskop normal über die Licht-Steckdosen geerdet war.)

Die Oszillogrammbilder Nr. 13 bis Nr. 24 stellen die gesamte Linearisierungswirkung, - am sogenannten Minuspolanschluß des Lautsprechers gemessen - dar.

Sie zeigen für sechs verschiedene Signalfrequenzen die Störspannungen ohne Potentialausgleichsleitung (linkes Bild) und mit Potentialausgleichsleitung (rechtes Bild); bei jeweils absolut gleicher Einstellung aller Geräte für das linke und rechte Oszillogramm.

Die Oszillogramme Nr. 25 bis Nr. 36 zeigen entsprechend die Störspannungen am Eingang des Verstärkers (gemessen am Massepunkt des benutzten Reservesignaleingangs, Aux.)

Die Einstellung des Oszilloskops war für alle Oszillogramme gleicher Frequenz gleich (Daten siehe Tabelle).[*]

Die gesamte Linearisierungswirkung beträgt (nach den Oszillogrammen Nr. 13 bis Nr. 36) mindestens 75%; also Reduzierung der Störspannungen auf ca. 25%.

---

[*] Bei den Oszillogrammen Nr. 13 bis Nr. 36 wurde die Zeiteinstellung pro cm des Oszilloskops nicht jeweils variiert.

gesamter Linearisierungseffekt am Lautsprecher gemessen

ohne Potentialausgleichsleitung

mit Potentialausgleichsleitung

Nr. 13

Nr. 14

f:

60

Nr. 15

Nr. 16

f:

400

0 247 554

gesamter Linearisierungseffekt am Lautsprecher gemessen

ohne P.

mit P.

Nr. 17

Nr. 18

f:

1.000

Nr. 19

Nr. 20

f

3.150

- 18 -

0 247 554

- 19 -

gesamter Linearisierungseffekt am Lautsprecher gemessen

Nr. 22

Nr. 24

mit P.

ohne P.

Nr. 21

f: 10.000

Nr. 23

f: 20.000

gesamter Linearisierungseffekt am Verstärkereingang gemessen ( Nr. 25 bis Nr. 36)

ohne P.

mit P.

Nr.
25

Nr.
26

f:

60

Nr.
27

Nr.
28

f:

400

0 247 554

ohne P.                           mit P.

Nr.                                                Nr.
29                                                 30

f :

1.000

                                                        -21-

Nr.                                                Nr.
31                                                 32

f :

3.150                                                   0 247 554

gesamter Linearisierungseffekt am Verstärkereingang gemessen

ohne P.

mit P.

Nr. 33

Nr. 34

f:

10.000

Nr. 35

Nr. 36

f:

20.000

-22-

0 247 554

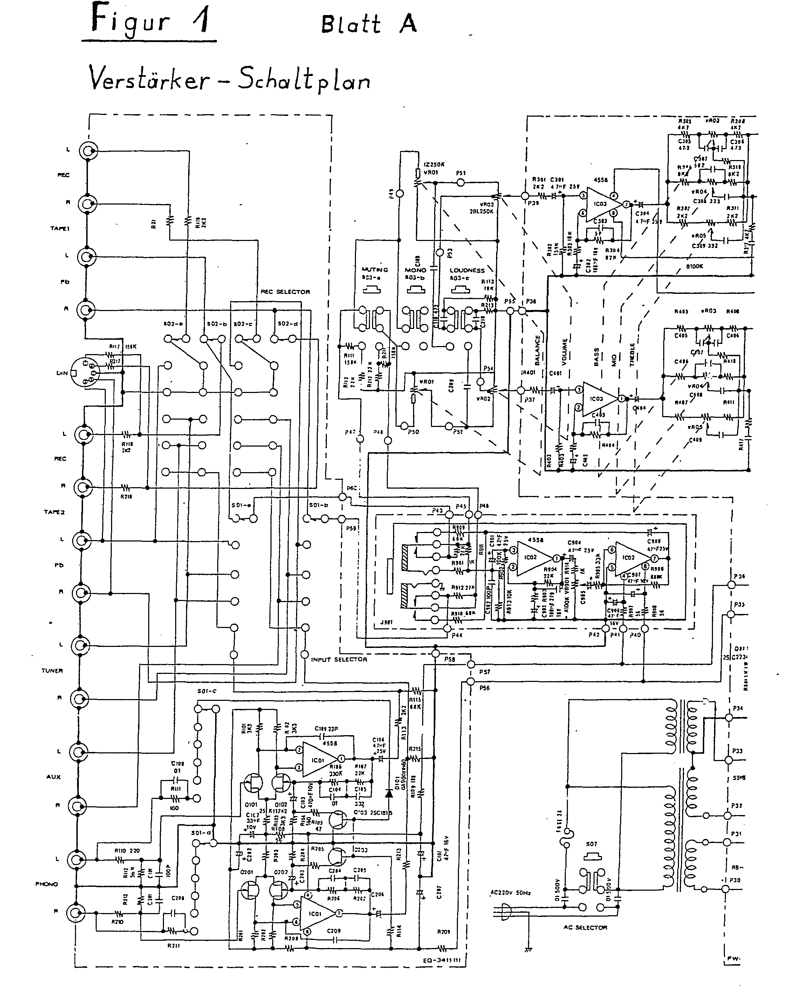

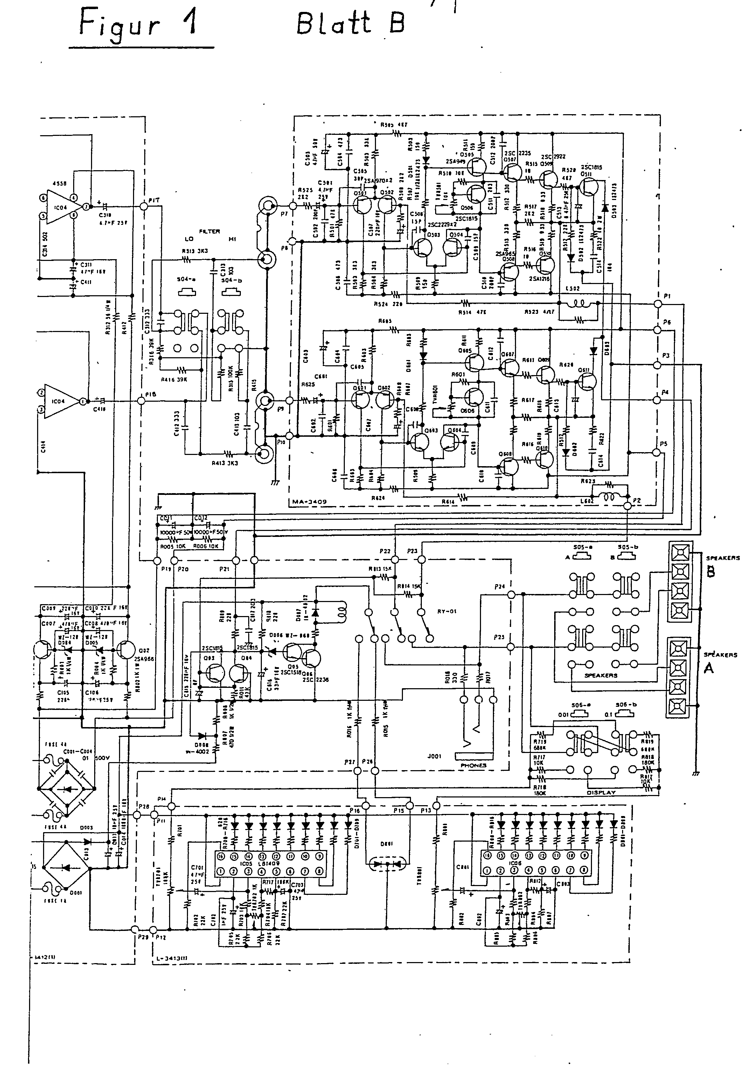

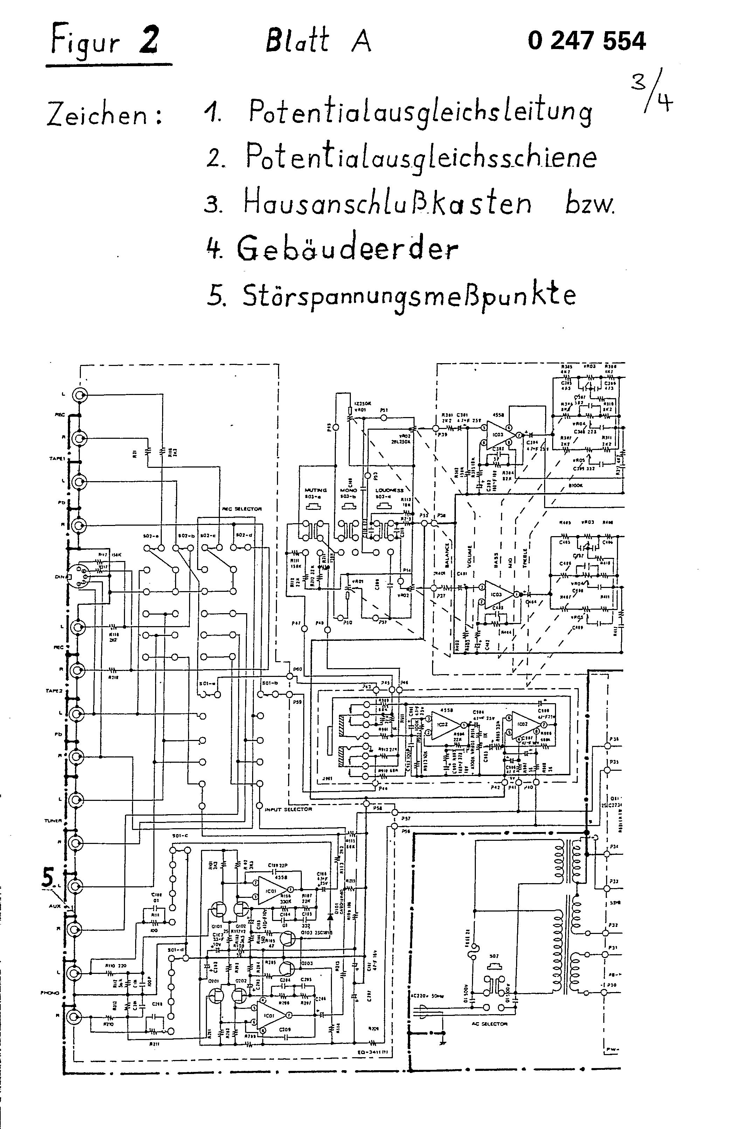

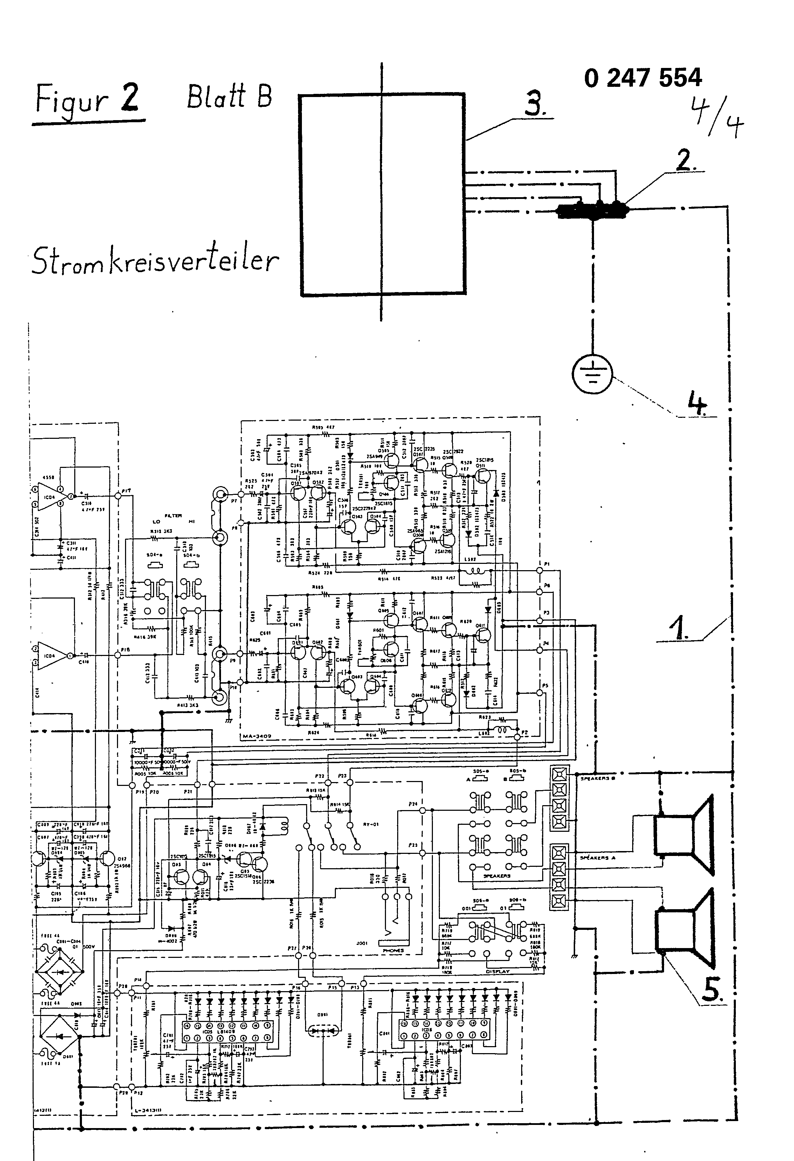

Patentansprüche:

1. Spezielle Ausgleichsleitung zur Ausschaltung von Potentialdifferenzen und zur Signallinearisierung zwischen dem speisenden Netz-Primärstromkreis, dem netzgekoppelten Sekundärstromkreis und den zu linearisierenden weiteren sekundären Signalstromkreisen, sowie innerhalb dieser Stromkreise, insbesondere für Verstärker, Lautsprecher und allgemein für elektrotechnische Geräte, also alle Betriebsmittel bei denen die Linearität von Bedeutung ist bzw. Potentialdifferenzen störend wirksam werden.

Die Ausgleichsleitung stellt innerhalb der verschiedenen Stromkreise, aber auch zwischen ihnen, einen Spannungsausgleich über die sogenannte Potentialausgleichsschiene (oder einen äquivalenten Erder) der elektrischen Abnehmeranlage - innerhalb deren Bereich die Erfindung angewendet wird - her.

Kennzeichnender Teil:

Dadurch gekennzeichnet, daß zwischen den Massepunkten der zu linearisierenden Stromkreise und der Potentialausgleichsschiene[1] (oder einem hiermit in Verbindung stehenden Erder) des speisenden Netz-Primärstromkreises (oder auch einem separaten Erder) eine leitende Verbindung hergestellt wird, die gegenüber dem hierfür üblich zur Verfügung stehenden Erdschutzleiter der Licht-Steckdosen des speisenden Netz-stromkreises einen sehr geringen - möglichst geringen - elektrischen Widerstand aufweist.

Oberbegriff des Unteranspruchs:

2. Ausgleichsleitung nach Anspruch 1, dadurch gekennzeichnet, daß diese Leitung bei Verwendung von Leitungskupfer einen größeren Querschnitt aufweist, als die Kupferleitungen der

---

1) Zur Potentialausgleichsschiene siehe Seiten 2/3 unten.

Licht-Steckdosen des speisenden Netz-Primärstromkreises der elektrischen Gebäudeinstallation innerhalb deren Netzstrom-Abnehmeranlage die Erfindung angewandt wird. Die Ausgleichsleitung hat insbesondere einen wesentlich größeren Querschnitt, als das Erdschutzleiterkabel, das von der jeweils zur Primärstromentnahme benutzten Steckdose bis zur Potentialausgleichsschiene der elektrischen Abnehmeranlage in Gebäuden teilweise mit 1,5 mm$^2$ Querschnitt installiert ist. Die Ausgleichsleitung führt von den Massepunkten der zu linearisierenden Gerätestromkreise zur Potentialausgleichsschiene oder zu einem äquivalenten Erder des Gebäudes, in dem die Erfindung angewendet wird. Die Geräte, bei denen die Erfindung verwandt wird, sind dazu geräteseits mit der Erfindung einzurichten oder nachzurüsten und mit der Potentialausgleichsschiene (bzw. einem äquivalenten Erder) in Verbindung zu bringen.


Oberbegriff des Unteranspruchs:

3. Ausgleichsleitung nach Anspruch 1, dadurch gekennzeichnet, daß bei der Anwendung der Erfindung bei Lautsprechern die Potentialausgleichsleitung in einer bevorzugten Ausführung bei den sogenannten Massepunkten (Minuspolen) der Lautsprecher ansetzt bzw. (mit größter Wirksamkeit) sofort am masseseitigen Ende der Lautsprecherschwingspule – bei elektrodynamischen Lautsprechern – beginnt.

4. Ausgleichsleitung nach Anspruch 1, dadurch gekennzeichnet, daß, bei der Anwendung der Erfindung bei Lautsprechern, die Stromzuführungskabel der Lautsprecher einen größeren Minuspol-Aderquerschnitt als Pluspol-Aderquerschnitt aufweisen.

---

1) Bei einer elektrischen Abnehmeranlage sind im Hausanschlußraum an die Potentialausgleichsschiene nach den elektrotechnischen Vorschriften der Fundamenteerder, der Null-, oder Schutzleiter (je nach Schutzmaßnahme) die Potentialausgleichsleitungen der metallenen Rohre für Wasser, Gas und Heizung, sowie die Erdungsleitungen von Antennen, Telefon und die Blitzschutzerde sowie Metallgerüst-Konstruktionen von Aufzügen anzuschließen (nach DIN VDE 0100, Teil 410).

In vielen älteren Gebäuden fehlt ein Gebäudeerder, hier sind die Erder des Stromversorgungsunternehmens als Erder für die Potentialausgleichsschiene eingesetzt (TN-Netz - Pen-Leiter ; im TN-Netz mit Hauserder stehen somit zwei Erder zur Verfügung. Hierdurch verbessert sich der Potentialausgleich zusätzlich; auch weil der Netz-Neutralleiter mit der Potentialausgleichsschiene leitend verbunden ist).

Aufgrund der anschlußmäßigen Verbindung zwischen Gebäudehaupterder und der Potentialausgleichsschiene der Netzstromabnehmeranlage des Gebäudes, kann die Potentialausgleichsleitung auch an den Gebäudeerder, oder einen äquivalenten Erder angeschlossen werden.

Figur 1    Blatt A

Verstärker – Schaltplan

Figur 1　　Blatt B　2/4　　0 247 554

Zeichen :  1. Potentialausgleichsleitung

2. Potentialausgleichsschiene

3. Hausanschlußkasten  bzw.

4. Gebäudeerder

5. Störspannungsmeßpunkte

Figur 2    Blatt B    **0 247 554**    4/4

Stromkreisverteiler